Europäisches Patentamt

European Patent Office

Office européen des brevets

(11) Publication number: **0 213 583 B1**

## EUROPEAN PATENT SPECIFICATION

(45) Date of publication of patent specification: **15.04.92**

(51) Int. Cl.5: **H01J 31/10**, H01J 29/00, H01J 29/86, G02B 13/16

(21) Application number: **86111719.0**

(22) Date of filing: **25.08.86**

(54) Cathode-ray tube device for projection television.

(30) Priority: **26.08.85 JP 128874/85 U**

(43) Date of publication of application:
**11.03.87 Bulletin 87/11**

(45) Publication of the grant of the patent:
**15.04.92 Bulletin 92/16**

(84) Designated Contracting States:
**DE FR GB IT NL**

(56) References cited:

**PATENT ABSTRACTS OF JAPAN, unexamined applications, E field, vol. 8, no. 209, September 22, 1984 THE PATENT OFFICE JAPANESE GOVERNMENT page 10 E 268**

**PATENT ABSTRACTS OF JAPAN, unexamined applications, E field, vol. 9, no. 147, June 21, 1985 THE PATENT OFFICE JAPANESE GOVERNMENT page 50 E 323**

**PATENT ABSTRACTS OF JAPAN, unexamined applications, E field, vol. 8, no. 36, February 16, 1984 THE PATENT OFFICE JAPANESE GOVERNMENT page 34 E 227**

(73) Proprietor: **DOW CORNING KABUSHIKI KAISHA**
**507-1, Kishi Yamakita-machi**
**Ashigarakami-gun Kanagawa(JP)**

(72) Inventor: **Mizushima, Kiyoshi**
**1-48, Sakamoto, Yokosuka-shi**
**Kanagawa Prefecture(JP)**

(74) Representative: **Spott, Gottfried, Dr. et al**
**Patentanwälte Spott und Puschmann**
**Sendlinger-Tor-Platz 11**
**W-8000 München 2(DE)**

## Description

The present application relates to a cathode-ray tube device for use in projection televisions.

In projection television systems, the images on several cathode-ray tube television receivers are simultaneously projected onto a common screen in order to project a composite image on the screen. For example, 3 cathode-ray tubes in a projection television will each project the same image, but separated into the three primary colors, that is, they project separated images in red, blue, and green in order to project a color image on the big screen.

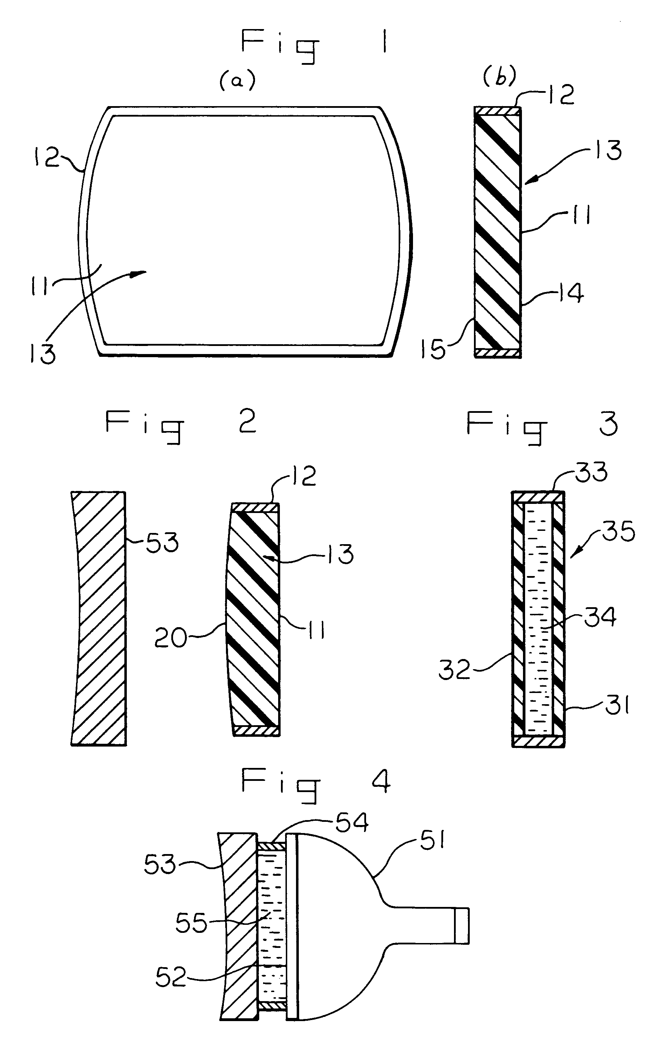

The projection cathode-ray tube devices used in such projection television systems have heretofore had the following organization. As demonstrated in Figure 4, a projection lens 53 is arranged at a distance from and facing the display screen 52 of a cathode-ray tube 51. An outer circumferential packing 54 of a light-stopping rubber material is installed on the exterior circumference of the gap between the cathode-ray tube 51 and the projection lens 53 in order to form a hermetically sealed space, into which a transparent silicone gel 55 is filled in order to couple the cathode-ray tube 51 optically to the projection lens 53 and so improve the brightness and contrast of the projected image. Such a device is e.g. known from JP-A-60-28144.

However, in the above-described organization for projection television cathode-ray tube devices, air bubbles occasionally form in the silicone gel 55 when air becomes trapped during the filling of silicone gel 55 into the hermetically sealed space. The presence of these air bubbles in the silicone gel 55 disturbs the projected image.

In addition, in the above-described projection television cathode-ray tube devices, the silicone gel 55 may cure and solidify with the passage of time, or occasionally due to elevated temperatures at the display screen 52 due to the generation of heat by the cathode-ray tube 51. The cured silicone gel 55 may exfoliate locally from the display screen 52 of the cathode-ray tube 51 or from the surface of the projection lens 53, thus generating a gap between the silicone gel and the display screen or between the silicone gel and projection lens surface. Again, these gaps disturb the projected image.

Brief Explanation of the Figures

Figures 1(a) and (b) are an explanatory front view and a vertical cross-sectional profile, respectively, of the present optical coupler in a cathode-ray tube device for projection television. Figure 2 is an explanatory vertical cross-sectional profile of the present optical coupler together with a projection lens. Figure 3 is another explanatory vertical cross-sectional profile of an optical coupler. Figure 4 is an explanatory vertical cross-sectional profile of a prior art cathode-ray tube device for projection television.

| 11 | coupler main body |
|----|----|
| 12 | light-stopping member |
| 13 | optical coupler |
| 14 | one surface |
| 15 | the other surface |
| 20 | protruding surface |
| 31 | surface wall on one side |
| 32 | surface wall on the other side |
| 33 | light-stopping sealing member |
| 34 | transparent filler |
| 35 | optical coupler |
| 51 | cathode-ray tube |
| 52 | display screen |
| 53 | projection lens |
| 54 | exterior circumferential packing |
| 55 | silicone gel |

The present invention seeks to solve the above problems. That is, in a cathode-ray tube device for projection television, which device is assembled from a cathode-ray tube, a projection lens arranged at a distance from and facing the display screen of the cathode-ray tube, and a transparent optical coupler inserted between the display screen of the cathode-ray tube and the projection lens, and said optical coupler is characterized in that the surface in press contact with the display screen of the cathode-ray tube is solid rubber and the other surface in contact with the surface of the projection lens is solid rubber.

In the organization described above, the surfaces of the optical coupler in contact with the display screen of the cathode-ray tube and with the projection lens are each solid rubber and the optical coupler thus will not exfoliate from the cathode-ray tube's display screen or from the surface of the projection lens due to curing over time. Also, because the present optical couplers may be manufactured independently, the occurrence of air bubbles in the interior of said optical coupler may be reliably prevented. As a result, the present invention provides a cathode-ray tube device for projection television which as an excellent projection function and a long life. The solid rubber surfaces are preferably silicone rubber or urethane polymers, most preferred being silicone rubber.

EXAMPLES

As demonstrated in Figures 1(a) and (b), one example of the execution of the present cathode-ray tube device for projection television is configured as follows. Using a room temperature-curable silicone rubber as the material, a coupler main body 11 is formed as a single molding whose external shape is adapted to both the display screen of the cathode-ray tube and the shape of the projection lens. A light-stopping member 12 of black silicone rubber is integrally attached to the outer circumferential edge of the coupler main body 11 to produce the optical coupler 13. The produced optical coupler 13 is inserted between the cathode-ray tube's display screen and the surface of the projection lens and is then pressed in order to contact one surface 14 of the optical coupler 13 to the display screen of the cathode-ray tube and the other surface 15 to the surface of the projection lens. The cathode-ray tube is thus optically coupled to the projection lens.

In this configuration, there is no restriction on the material of coupler main body 11 as long as it is a transparent silicone rubber, for example, its hardness may be high or low. Various methods known heretofore may be employed in order to bond and hold the 3 elements, i.e., the cathode-ray tube, projection lens, and optical coupler 13, together as a single body.

Figure 2 shows a modified example of the optical coupler 13 depicted in Figure 1. This example describes a coupler main body 11 with a protruding surface 20 in which the center is expanded outward on the side to be contacted with the projection lens. By forming a protruding surface 20 in which the center is expanded outward, deformation of the center of said protruding surface 20 by pressing against the projection lens 53 acts to expand the region surrounding the center toward the projection lens 53 and thus bring coupler main body 11 into complete contact with the projection lens 53 without leaving any gaps with the surface of the projection lens 53. In addition to or instead of protruding surface 20, the coupler main body 11 may possess a protruding surface like protruding surface 20 on the side to be contacted with the display screen of the cathode-ray tube.

Figure 3 gives another example of an optical coupler according to the present invention. In this example, one surface wall 31 faces the other surface wall 32 across some interval and a light-stopping sealing material 33 of black silicone rubber is installed on their circumferential edges. A transparent filler--of a transparent silicone gel or a room temperature-curable silicone rubber--is filled into the gap formed between surface wall 31 on one side and surface wall 32 on the other side in order to produce optical coupler 35. As for the above optical couplet 13, the structure of a cathode-ray tube device for projection television is obtained by inserting the obtained optical coupler 35 between the cathode-ray tube and projection lens. In the above, the material to be employed for surface wall 31 and surface wall 32 is a transparent solid rubber and actual preferred examples are elastic urethane polymers and silicone rubbers.

In addition, a silicone oil, as disclosed in Tokkyo Kohyo Koho No. 56-501711[81-501711], published Novemter 26, 1981, to W. D. Larson, may be blended and present in the rubber constituting coupler main body 11 in the examples of Figure 1 or 2, or in the rubber constituting surface wall 31 and/or surface wall 32 in the example of Figure 3. In this procedure, the blended silicone oil bleeds onto the surface of the optical coupler with the effect that said optical coupler will always be in good contact with the display screen of the cathode-ray tube or the projection lens. When silicone gel is filled into the interior of the example of Figure 3, said silicone gel may be designed to bleed onto the surface of the surface wall.

In addition, good contact is obtained by coating silicone oil on the display screen of the cathode-ray tube or on the surface of the projection lens when the optical coupler is arranged and united with the cathode-ray tube and projection lens.

Effects of the Cathode-ray Tube Device

The present optical coupler in which the surface in contact with the display screen of a cathode-ray tube and the surface in contact with the projection lens are solid rubber. As a result, said optical coupler does not deteriorate with time and wiil not peel from the display screen of the cathode-ray tube or from the surface of the projection lens. It will exhibit its original excellent functions for a long period of time. In addition, because said optical coupler can be independently manufactured, the presence of air bubbles in the interior of said optical binder is prevented and it is easily handled, so its cost of production is reduced. As a result, the present invention can provide a cathode-ray tube device for projection television which exhibits an excellent function and a long use life.

**Claims**

1. Cathode-ray tube device for projection television comprising a cathode-ray tube, a projection lens arranged at a distance from and facing the display screen of said cathode-ray tube, and a transparent optical coupler inserted between the display screen of said cathode-ray tube and said projection lens, characterized in that the surface of the optical coupler in press contact with the display screen of said cathode-ray tube is solid rubber and the other surface in contact with the surface of said projection lens is solid rubber.

2. The cathode-ray tube device according to claim 1 in which the solid rubber is silicone rubber

## Revendications

1. Dispositif de tube cathodique pour la télévision par projection, comprenant un tube cathodique, un objectif de projection situé à distance et en vis-à-vis de l'écran dudit tube cathodique, et un coupleur optique transparent inséré entre l'écran d'affichage dudit tube cathodique et ledit objectif de projection, caractérisé en ce que la surface du coupleur optique en contact sous pression avec l'écran d'affichage dudit tube cathodique est réalisée en caoutchouc plein et que l'autre surface en contact avec la surface dudit objectif de projection est réalisée en caoutchouc plein.

2. Dispositif de tube cathodique selon la revendication 1, dans lequel le caoutchouc plein est du caoutchouc au silicone.

## Patentansprüche

1. Kathodenstrahlröhreneinrichtung für Projektionsfernsehen, mit einer Kathodenstrahlröhre, einer mit Abstand zum Kathodenstrahlröhren-Bildschirm angeordneten und diesem zugewandten Projektionslinse und einem zwischen dem Kathodenstrahlröhren-Bildschirm und der Projektionslinse eingefügten transparenten optischen Koppler, **dadurch gekennzeichnet, daß** die in Andruckberührung mit dem Kathodenstrahlröhren-Bildschirm stehende Oberfläche des optischen Kopplers aus Vollgummi besteht und die andere, in Berührung mit der Projektionslinsenoberfläche stehende Oberfläche aus Vollgummi besteht.

2. Kathodenstrahlröhreneinrichtung nach Anspruch 1, **dadurch gekennzeichnet, daß** das Vollgummi Silikongummi ist.

Fig 1

(a)

(b)

12

11

13

12

13

11

14

15

Fig 2

53

12

13

20

11

Fig 3

33

35

34

32

31

Fig 4

54

53

51

55

52